# EUROPÄISCHE PATENTSCHRIFT

(11) **EP 3 375 797 B1**
(45) Veröffentlichungstag und Bekanntmachung des Hinweises auf die Patenterteilung: **29.04.2020**
(21) Anmeldenummer: 18000251.1
(22) Anmeldetag: 13.03.2018
(51) Int. Cl.: C08F 220/38, H01M 2/16, H01M 10/0525

(54) **FÜLLSTOFFPOLYMERE, VERFAHREN ZU DEREN HERSTELLUNG UND DEREN VERWENDUNG**
FILLER POLYESTER, METHOD FOR THEIR PREPARATION AND THEIR USE
POLYMÈRES DE REMPLISSAGE, LEUR PROCÉDÉ DE PRODUCTION ET LEUR UTILISATION

(30) Priorität: 14.03.2017 DE 102017105335
(43) Veröffentlichungstag der Anmeldung: 19.09.2018
(73) Patentinhaber: Karlsruher Institut für Technologie, 76131 Karlsruhe (DE)
(72) Erfinder: HOFMANN, Andreas, 76297 Stutensee (DE); HANEMANN, Thomas, 76297 Stutensee (DE)

(56) Entgegenhaltungen:
- EP-A1- 1 667 254
- CN-A- 102 719 046
- DE-A1-102011 050 510
- US-B2- 8 552 130
- CHIAM-WEN LIEW ET AL: "Poly(Acrylic acid)-Based Hybrid Inorganic-Organic Electrolytes Membrane for Electrical Double Layer Capacitors Application", POLYMERS, Bd. 8, Nr. 5, 18. Mai 2016 (2016-05-18), Seite 179, XP055495756, CH ISSN: 2073-4360, DOI: 10.3390/polym8050179

## Beschreibung

Die vorliegende Erfindung betrifft Füllstoffpolymere, deren Herstellungsverfahren sowie deren Verwendung als Feststoffelektrolytmembrane in Lithium-Ionen-Batterien.

### Stand der Technik

### Technisches Gebiet

Die Erfindung ist im Bereich der Füllstoff-verstärkten Polymere angesiedelt und der primäre Anwendungsbereich betrifft elektrochemische Energiespeicherung basierend auf Feststoff-Polymerelektrolytmembrane für Li-Ionen-Batterien. Diese Feststoffpolymerelektrolytmembrane sind im Vergleich zu Flüssigelektrolyte laut Zhang et al. **[1]** sicherer und weisen eine erhöhte Energiedichte bei Nutzung in Zellen mit entsprechendem Aktivmaterial auf. Die erhöhte Energiedichte im Aktivmaterial ist darauf zurückzuführen, dass der Feststoffelektrolyt weniger Volumen einnimmt als ein vergleichbarer Separator/Elektrolyt oder alternative Elektrodenmaterialien verwendet werden können (z.B. Lithium-Anode) .

Zhang et al. beschreiben in **[1]** als leitfähige Feststoff-Polymerelektrolytehybride organisch/anorganische Materialien für Lithium-Ionen-Batterien. Das Hinzuführen von anorganischen Nanomaterialien in die Polymermatrix erhöht die ionische Leitfähigkeit (von bis zu 10⁻⁵ S.cm⁻¹). In diesen Systemen, wie z.B. aluminat-, siloxyaluminat- oder thioaluminatbasierten anorganischen Materialien, genügen die mechanischen Eigenschaften der Polymerelektrolyte nicht für einen Einsatz in Batterien. Die Bindungen vom Typ C-O-Al oder C-S-Al sind zudem gegenüber Wasser instabil und schränken eine Anwendung als Elektrclyte stark ein.

Liew et al. offenbaren in **[2]** Feststoffelektrolyte auf Acrylbasis, die den Füllstoff TiO₂ enthalten. US8552130B2 offenbart mit einer Arylgruppe versehene ionische Acrylate, deren Polymerisation beschrieben wird. Organische und anorganische Füllstoffe werden erwähnt. Diese Füllstoffe tragen nicht zur mechanischen Stabilität bei, da sie nicht fest in der Polymermatrix eingebunden sind.

### Aufgabenstellung

Ausgehend hiervon besteht die Aufgabe darin, die Einschränkungen und Nachteile des Standes der Technik zu überwinden.

Insbesondere besteht die Aufgabe der vorliegenden Erfindung darin, neuartige füllstoffverstärkte Polymere bereitzustellen, deren Materialeigenschaften gezielt verändert bzw. verbessert werden können.

Ferner besteht die Aufgabe darin, füllstoffverstärkte Polymere bereitzustellen, die eine mechanische Stabilität und eine erhöhte Ionenleitfähigkeit aufweisen sowie ein Verfahren zu deren Herstellung und deren Verwendung als Feststoffelektrolytmembrane in Lithium-Ionen-Batterien zu offenbaren.

### Lösung

Diese Aufgabe wird im Hinblick auf die Füllstoffpolymere durch die Merkmale des Anspruchs 1, im Hinblick auf das Herstellungsverfahren durch die Merkmale des Anspruchs 7 sowie im Hinblick der Verwendung durch die Merkmale des Anspruchs 10 gelöst. Die Unteransprüche beschreiben jeweils vorteilhafte Ausgestaltungen der Erfindung.

### Detaillierte Beschreibung

Die vorliegende Erfindung befasst sich mit Füllstoffpolymeren umfassend Polyacrylate der allgemeinen Formel 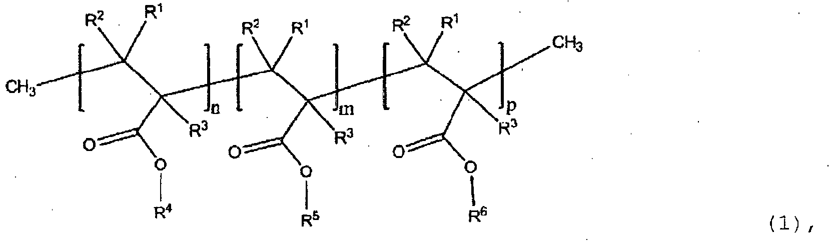 wobei
- R¹, R², R³ eine Alkylgruppe oder H ist und R¹=R²=R³ oder R¹=R²≠R³ oder R¹≠R²=R³ oder R²≠R¹=R³ oder R¹≠R²≠R³,
- n≥1, m≥1, p≥0 und n+m+p die Kettenlänge ist,
- der Rest R⁴ mindestens ein keramischer Füllstoff ist,
- der Rest R⁵ mindestens ein Kation mit einem Gegenanion oder ein Anion mit einem Gegenkation ist,
- der Rest R⁶ ein organischer, keine Ionen enthaltender Rest ist, bevorzugt ein H oder eine Alkylgruppe oder ein Glycol oder ein Aminoalkyl,
- der Rest R⁶ einen oder mehrere Polymerketten verbrücken kann, indem an ihn mehrere Acrylat- und/oder Methacrylat- und/oder Acrylatderivatgruppen gebunden sind,
- die Monomereinheiten der Polymer-Hauptkette mit den Resten R⁴ oder R⁵ oder R⁶ entlang der Polymer-Hauptkette statistisch verteilt sein können,
- der Rest R⁴ an einer oder mehreren Monomereinheit(en) gebunden ist,
und wobei die Polyacrylate der allgemeinen Formel (1) mit den Resten R⁴ oder R⁵ oder R⁶ jeweils mittels mindestens einer kovalenten Bindung verbunden sind.

In einer bevorzugten Ausgestaltung sind R¹=R²=R³=H oder R¹=R²=H und R³ eine Methylgruppe.

In einer besonderen Ausgestaltung ist der Rest R⁴ an mehrere Monomereinheit(en) über das Sauerstoffatom gebunden, wie es in Fig.1 dargestellt ist.

Eine Acrylatderivatgruppe hat die allgemeine Formel 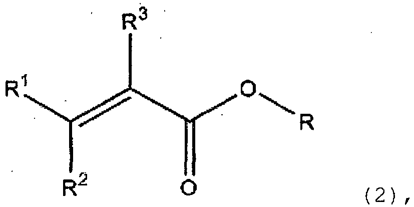 wobei für ein Acrylat R¹, R², R³ = H, für Methacrylat R¹, R²=H und R³=CH₃ und für ein Acrylatderivat R¹, R², R³=Alkyl oder H ist. R ist ein anorganischer oder organischer Rest.

In einer besonderen Ausgestaltung ist der mindestens eine keramische Füllstoff auf seiner Oberfläche mit freien OH-Gruppen versehen.

Der mindestens eine keramische Füllstoff ist bevorzugt Al₂O₃, SiO₂, LiAlO₂, BaTiO₃, TiO₂ CeO₂, In₂O₃, MgO, SrO, SnO₂, Y₂O₃, ZnO, ZrO₂, Fe₂O₃, Fe₃O₄, MgAl₂O₄ oder Mg(OH)₂, besonders bevorzugt Al₂O₃, SiO₂ oder LiAlO₂.

Der mindestens eine keramische Füllstoff ist bevorzugt auf dessen Oberfläche durch die Anbindung einer Acrylat und/oder Methacrylatgruppe und/oder Acrylatderivatgruppe über Silane gezielt funktionalisiert. In einer besonderen Ausgestaltung ist das Silan ein Trialkoxysilanderivat, bevorzugt ein Trimethoxy- oder Triethoxysilanderivat.

In einer besonderen Ausgestaltung umfasst der mindestens eine keramische Füllstoff keramische Mikro- und/oder Nanopartikel. Bevorzugt mit einer Größe zwischen 5 nm und 5 µm, besonders bevorzugt zwischen 10 nm und 750 nm insbesondere zwischen 20 und 250 nm. In einer besonderen Ausgestaltung werden die Füllstoffpolymere als Schicht oder Folie ausgebildet. Die Größe der Mikro- und/oder Nanopartikel macht bevorzugt maximal 1/10dieser Schichtdicke aus. Die Schichtdicke beträgt bevorzugt zwischen 500 nm und 50 µm, besonders bevorzugt zwischen 2 µm und 20 µm.

Der Begriff "keramisch" bedeutet anorganisch, nicht-metallische Materialien.

In einer besonderen Ausgestaltung ist die Monomereinheit mit R⁵ (siehe **Fig.1**) im unpolymerisierten Zustand eine ionische Flüssigkeit. Dies bedeutet, dass das Kation mit dem Gegenanion bzw. das Anion mit dem Gegenkation mit der Acrylat- bzw. Methacrylat bzw. Acrylatderivatgruppe funktionalisiert als Monomer eine ionische Flüssigkeit bildet.

Eine ionische Flüssigkeit ist ein Salz, umfassend ein Kation und ein Anion, die über eine schwache ionische Bindung zueinander verfügen. Mindestens eine der ionischen Komponenten ist organisch und eine weist eine delokalisierte Ladung auf. Diese Eigenschaften führen dazu, dass diese Salze kein stabiles Kristallgitter einnehmen, sondern bei Raumtemperatur oder bevorzugt unter 100°C als Flüssigkeiten vorkommen.

In einer besonderen Ausgestaltung umfasst das Kation der ionischen Flüssigkeit eine polymerisierbare Gruppe, bevorzugt eine Acrylat- und/oder eine Methacrylatgruppe und/oder eine Acrylatderivatgruppe. Mittels dieser polymerisierbaren Gruppe wird die ionische Flüssigkeit an das Polymergerüst gebunden.

In einer besonderen Ausgestaltung werden die Acrylat- und oder Methacrylat- und/oder Acrylatderivathaltigen ionischen Flüssigkeiten aus einem aminhaltigen Acrylat- bzw. Methacrylat durch Herstellung der quartären Ammoniumverbindung mit nachfolgendem Ionenaustausch synthetisiert.

In einer weiteren Ausgestaltung ist das Kation der ionischen Flüssigkeit aus der Gruppe Imidazolium, Pyridinium, Pyrrolidinium, Guanidinium, Uronium, Piperidinium, Morpholinium, Ammonium oder Phosphonium, bevorzugt aus der Gruppe Imidazolium, Pyridinium, Piperidinium oder Ammonium ausgewählt.

Besonders bevorzugt ist als Kation Ammonium insbesondere N,N,N-Triethyl-N-[2-acryloxy)ethyl]ammonium und/oder N,N,N-Triethyl-N-[2-methacryloxy)ethyl]ammonium. Ein stickstoff-haltiges Kation vermeidet im Vergleich zu einem sauerstoffhaltigen Kation die Komplexbildung oder Bindung der Sauerstoffatome mit den Lithium-Ionen, die zu einem Leitfähigkeitsverlust führen würde.

Das Anion der ionischen Flüssigkeit ist in einer weiteren Ausgestaltung aus der Gruppe Halogenide, Tetrafluoroborate, Trifluoroacetate, Triflate, Hexafluorophosphate, Phosphinate, Tosylate, Azanid,. Imide oder Amide, bevorzugt aus der Gruppe Tetrafluoroborate, Oxalate, Borate, Hexafluorophosphate, Azanid und Imide ausgewählt. Besonders bevorzugt ist das Anion bis(trifluormethansulfonyl)imid (TFSI).

Die Nutzung der ionischen Flüssigkeiten erlaubt eine bessere mechanische (weiche) Beschaffenheit der füllstoffverstärkten Polyacrylate und eine gute Elastizität. Die freibeweglichen Ladungen, bevorzugt Anionen in der Polymermatrix, können diese mechanische Flexibilität erklären. Auch die Leitfähigkeit wird deutlich erhöht.

In einer besonderen Ausgestaltung werden Acrylate und/oder Methacrylate und/oder Acrylatderivate zu der Acrylat- und/oder Methacrylat- und/oder Acrylatderivathaligen ionischen Flüssigkeiten beigemischt, sodass die Dichte der freibeweglichen Ladungen gezielt einstellbar ist und somit eine Abstufung der enthaltenen Ladungen im Polymer erreicht werden kann.

In einer besonderen Ausgestaltung umfassen die erfindungsgemäßen Füllstoffpolymere Leitsalze, um deren Leitfähigkeit zu erhöhen. Bevorzugt sind die Leitsalze Li-Ionen-Quellen, also lithiumhaltige Salze bevorzugt LiTFSI, LiPF₆, LiBF₄, LiBOB, LiClO₄, LiAsF₆, Lithiumoxalat, LiF, LiOTf und/oder LiDFOB, besonders bevorzugt LiTFSI, LiPF₆, LiBF₄, LiBOB und/oder LiDFOB.

Weiterhin betrifft die vorliegende Erfindung ein Verfahren zur Herstellung neuartiger füllstoffverstärkter Polyacrylate bzw. Polymethacrylate mit den nachfolgenden Verfahrensschritten:
Im ersten Verfahrensschritt werden ein mit mindestens einer Acrylat- und/oder einer Methacrylat- und/oder Acrylatderivatgruppe funktionalisierter keramischer Füllstoff (R⁴, funktionalisiert) und mindestens ein polymerisierbares Acrylatderivat mit einer Acrylat- und/oder Methacrylat- und/oder Acrylatderivatgruppe als Monomer (R⁵, funktionalisiert; optional zusätzlich mit R⁶, funktionalisiert) bereitgestellt.

In einem zweiten Verfahrensschritt werden die Monomere mit dem mindestens einen mit mindestens einer Acrylat- und/oder einer Methacrylatgruppe und/oder einer Acrylatderivatgruppe funktionalisierten keramischen Füllstoff gemischt und anschließend bevorzugt mittels UV- oder thermisch-initiierter radikalischer Polymerisation polymerisiert.

Somit polymerisieren die funktionalisierten Acrylat- und/oder Methacrylatgruppen sowie die Monomere und es entsteht ein festes Polymernetzwerk mit kovalenten Bindungen zwischen dem keramischen Füllstoff und den funktionellen Gruppen, die wiederum kovalent am Polymergerüst verbunden sind.

In einer besonderen Ausgestaltung ist als polymerisierbares Edukt eine ionische Flüssigkeit vorgesehen, die ein polymerisierbare Acrylat und/oder Methacrylat und/oder Acrylatderivat kovalent verbunden mit einem Kation oder Anion umfasst.

In einer besonderen Ausführung wird die Vermischung der Edukte im zweiten Verfahrensschritt mittels mechanischer Unterstützung, z.B. mittels Schwingmühle, erreicht. Dadurch ist eine bessere Homogenisierung der Eduktmischung möglich.

In einer weiteren Ausführung wird beim zweiten Verfahrensschritt zur besseren Vermischung niedrigsiedendes organisches Lösungsmittel, wie z.B. Aceton, beigefügt. Dieses Lösungsmittel kann unmittelbar vor der Polymerisation entfernt werden, da die Acrylat- bzw. Methacrylat- bzw. Acrylatderivat-funktionalisierten ionischen Flüssigkeiten nahezu keinen Dampfdruck besitzen.

In einer besonderen Ausführung ist das polymerisierbare Acrylat und/oder Methacrylat als Monomer eine mit Acrylat- und/oder Methacrylat und/oder Acrylatderivatgruppe versehene ionische Flüssigkeit. Bevorzugt enthält die ionische Flüssigkeit eine positive Ladung, die damit an das Polymergerüst fixiert wird. Besonders bevorzugt enthalten die ionischen Flüssigkeiten Anionen, die in dem Polymergerüst frei beweglich sind.

In einem weiteren Verfahrensschritt werden zusätzlich während des zweiten Verfahrensschritts der Polymerisation Zusätze hinzugefügt, wie z.B. Salze, Lösungsmittel, andere Acrylate/Methacrylate/Acrylatderivate. Damit ist es möglich, Polymereigenschaften gezielt zu modifizieren. Dies können z.B. sein: Leitfähigkeit, Festigkeit, Glasumwandlungspunkt, Zugfestigkeit, Elastizität.

Die vorliegende Erfindung betrifft außerdem die Verwendung der Füllstoffpolymere als Bestandteil von Feststoffelektrolyt-Membrane für Lithium-Ionen-Zellen. In einer besonderen Ausführung wird durch den Zusatz eines Lithiumleitsalzes und dem Einbringen von Lithium-Ladungsträgern die spezifische Li-Leitfähigkeit erhöht.

In einer besonderen Ausgestaltung werden die füllstoffverstärkten Polymere als Feststoffmembrane, Polymere mit optischen Eigenschaften, Verstärkung von Kondensatoreffekten oder als Kondensatoren verwendet.

Ein besonderer Vorteil der vorliegenden Erfindung ist, dass der keramische Füllstoff kovalent in der Polymermatrix eingebunden ist, sodass eine mechanische Stabilität erreicht wird, die es ermöglicht, diese Füllstoffpolymere in Batterien einzusetzen. Die direkte chemische Verbindung zwischen dem keramischen Füllstoff und dem Polymer, das wiederum kovalent mit der ionischen Flüssigkeit verbunden ist, bewirkt, dass der keramische Füllstoff ohne Aufwand herausgelöst werden kann.

Ein weiterer Vorteil ist, dass der Einsatz von ionischen Flüssigkeiten die Einbringung von Ladungen im Polymer ermöglicht, was die Leitfähigkeit erhöht und die mechanische Flexibilität der Füllstoffpolymere erlaubt. Dadurch werden weiche, elastische Polymere erhalten.

Der Einsatz unterschiedlicher keramischer Füllstoffe, die in der Polymermatrix fest verankert werden, ermöglicht es, an die Anwendung angepasste Eigenschaften zu erzielen, wie z.B. die Polymerhärte oder die Dielektrizität.

Die neuartigen ionenleitfähigen Materialien sind aufgrund ihrer gezielt einstellbaren Eigenschaften in einer großen Anzahl an Verwendungen vorstellbar. Beispiele dafür sind Energiespeicher, wie Batterien und Superkondensatoren bzw. Doppelschichtkondensatoren.

### Ausführungsbeispiele

Die Erfindung wird im Folgenden anhand **Fig.1** und von Ausführungsbeispielen näher erläutert. Die Herstellung verschiedener Füllstoff-verstärkter Polymere mit Charakterisierung der mechanischen und elektrochemischen Eigenschaften wurde bisher durchgeführt.

**Fig.1** zeigt eine schematische Darstellung der erfindungsgemäßen Füllstoffpolymere. Der Partikel **1** ist anstelle eines Rests R⁴ dargestellt (d.h. der Partikel ist ein keramischer Füllstoff R⁴), der beispielhaft für eine mehrfache oder einfache Bindung sowohl mit einem (unten am Partikel **1** in **Fig.1**) als auch mit drei (oben am Partikel **1** in **Fig.1**) Monomeren R (R⁵ und optional R⁶) kovalent verbunden ist. Die Pclymerhauptkette besteht aus Acrylat- bzw. Methacrylat- bzw.' Acrylatderivat-Monomeren M/A. Die Bindungen **2** und **2'** sind kovalent.

### Ausführungsbeispiel 1: Herstellung der Acrylat-haltigen ionischen Flüssigkeit

2-(Diethylamino)ethylacrylat (27,90 g, 162,93 mmol) und Ethylbromid (25,32 g, 232,36 mmol, 1,4 mal-Überschuss) wurden unter kontinuierlichem Rühren in getrocknetem Aceton (30 ml) gelöst und das Gemisch unter Ar-Gas bei 47 °C für 5 Tage gerührt. Das Lösungsmittel wurde anschließend unter Vakuum entfernt. Der erhaltene weiße Feststoff wurde mit Diethylether (3 x 50 ml) mittels Filternutsche gereinigt. Anschließend wurde das Produkt im Vakuum getrocknet. Das Produkt kann zur besseren Aufreinigung aus einer Mischung von EtOH/Diethylether umkristallisiert werden. Die Ausbeute betrug 27,14 g (96,86 mmol, 59,45 %) weißes Pulver.

N, N, N-Triethyl-N-[2-(acryloxy)ethyl]ammonium Bromid (27,17 g, 96,97 mmol) wird in 82 ml H₂O gelöst (klare Lösung). Anschließend wurde das in H₂O gelöste Lithium Bis(trifluoromethansulfonyl)imid (30,66 g, 106,80 mmol, in 72 ml H₂O) zugegeben. Schnell bildete sich ein Niederschlag in H₂O. Die Mischung wurde bei Raumtemperatur weitere 5 h gerührt. Das Wasser wurde abdekanntiert und das Produkt mehrfach mit Wasser gewaschen (2 x 75 ml). Die Abwesenheit von Bromid kann mittels Silbernitrat geprüft werden. Anschließend wurde das Produkt mit Ethylacetat extrahiert, die vereinigten Fraktionen mit Wasser gewaschen und das Lösungsmittel mittels Rotationsverdampfer entfernt (40°C).

Das erhaltene Produkt (A-TFSI) wurde unter Vakuum bei Raumtemperatur getrocknet und in der Glove-Box aufbewahrt. Da das Produkt relativ schnell polymerisiert, sollte es verdünnt (z.B. Aceton) oder mit einem Stabilisator kühl aufbewahrt werden. Die Ausbeute ergab 39,50 g (82,22 mmol, 84,79 %), leicht-orange viskose ölförmige Flüssigkeit.

### Ausführungsbeispiel 2: Herstellung Acrylat-funktionalisierter Partikel

Durch hydrolytische Kondensation von 3-(Methacryloxy)propyl-trimethoxysilan (MPS) können dessen Silan-Endgruppen mit den Hydroxygruppen von Partikeloberfläche reagieren und somit auf deren Oberflächen kovalent gebunden werden. Die erhaltene MPSfunktionalisierte Nanopartikel (im Nachfolgenden als "f-Np" gekennzeichnet) können als keramische Füllstoffe für die Herstellung von Füllstoffpolymeren verwendet werden.

Das Pulver Al₂O₃ (4,6 g) wurde mittels Schwingmühle (25 s-1, 5 min; Mahlkugel aus Zirkonoxid d = 3 mm, 100 St, Mahlbecher aus Zirkonoxid 25 ml) in EtOH (60 ml) dispergiert und anschließend die Suspension im Glasrundkolben (100 ml) mit Ammoniak-Lösung (Ammoniak: EtOH = 1:1 vol.-%, 12,5 ml) gemischt. Dadurch wurde der pH-Wert auf ca. 12 erhöht. Anschließend wurde MPS (8,67 g, 34,9 mmol, in 10 ml EtOH gelöst) unter Rühren tropfenweise zu der Pulver-Suspension zugegeben. Die Mischung wurde bei 40 °C für 22 h gerührt.

Nachbehandlung: Nach der Funktionalisierung wurden die Proben in zwei Teile unterteilt: eine Probe (getrocknete Proben, t-f-Np) wurde nach 1 Mal zentrifugieren (6000 rpm, 15 min) direkt unter Ethanol gelagert bzw. getrocknet. Die zweite Probe (zentrifugiert und gereinigte Proben, z-f-Np) wurde 4 Mal zentrifugiert (6000 rpm, 15 min, mit trockenem Ethanol gereinigt) und unter Ethanol gelagert bzw. getrocknet. Die Trocknung erfolgte auf der Heizplatte bei 50 °C für 2-3 Tage, um das EtOH zu entfernen.

### Ausführungsbeispiel 3: Herstellung der Polymerisate

1 g N,N,N-Triethyl-N-[2-(acryloxy)ethyl]ammonium bis(trifluoromethansulfonyl)imid (A-TFSI) wurde in 1 g Aceton gelöst und mit 250 mg Acrylat-silanisiertem Al₂O₃ und 40 µL Radikalstarter (tert-Bütylperoxybenzoat) homogenisiert (mit einem Rührstab) und polymerisiert bei 120°C. Es wird ein klebrig-weißes Polymerisat erhalten.

Festere Polymerisate können hergestellt werden, indem TEG-DMA (Triethylenglycoldimethacrylat) zugegeben wird. Dadurch wird eine Quervernetzung im Polymer erreicht. Es wurden 2 g A-TFSI in 2 g Aceton mit 200 µL TEG-DMA mit 70 mg funktionalisierten Al₂O₃-Partikeln und 40 µL tert-Butylperoxybenzoat homogenisiert und bei 80-120 °C polymerisiert. Das erhaltene Produkt ist elastisch-klebrig.

### Ausführungsbeispiel 4: Herstellung der Polymere mit zusätzlichen Salzen

Zuerst wurde das Lithiumsalz LiTFSI und silanisiertes Pulver f-Np im Mahlbecher (Material: Edelstahl; 5 ml; 50 St. Mahlkugeln; d = 3mm) vorgelegt. In diesen Mahlbecher wurde mittels Mikropipette die A-TFSI-Lösung, DCP-Lösung, TEG-DMA und Aceton hinzugegeben. Dann erfolgte eine Vermahlung des Gemisches im Mahlbecher mittels Schwingmühle (Frequenz: 20 s-1; t = 5 min). In der Glovebox wurde die Mischung auf eine Glas-Petrischale gegossen und mittels Vakuum das Aceton entfernt. Anschließend wurde die Glasplatte auf eine Heizplatte gestellt, um die Polymerisation zu initiieren (T = 110°C). Nach 24 h wurde die Reaktion durch Abkühlen beendet.

Der Vorteil der Einsetzung von funktionalisierten keramischen Füllstoffen wird in **Tabelle 1** aufgezeigt.

Die Versuchsnummer 632-1 enthält 4,5 Gew% funktionalisiertes LiAlO₂; 650-1 die gleiche Menge nicht-funktionalisiertes LiAlO₂ und 650-7 keinen Füllstoff.

Die Leitfähigkeit bei 20°C und bei 40°C wird deutlich erhöht durch den Einsatz eines funktionalisierten keramischen Füllstoffs.

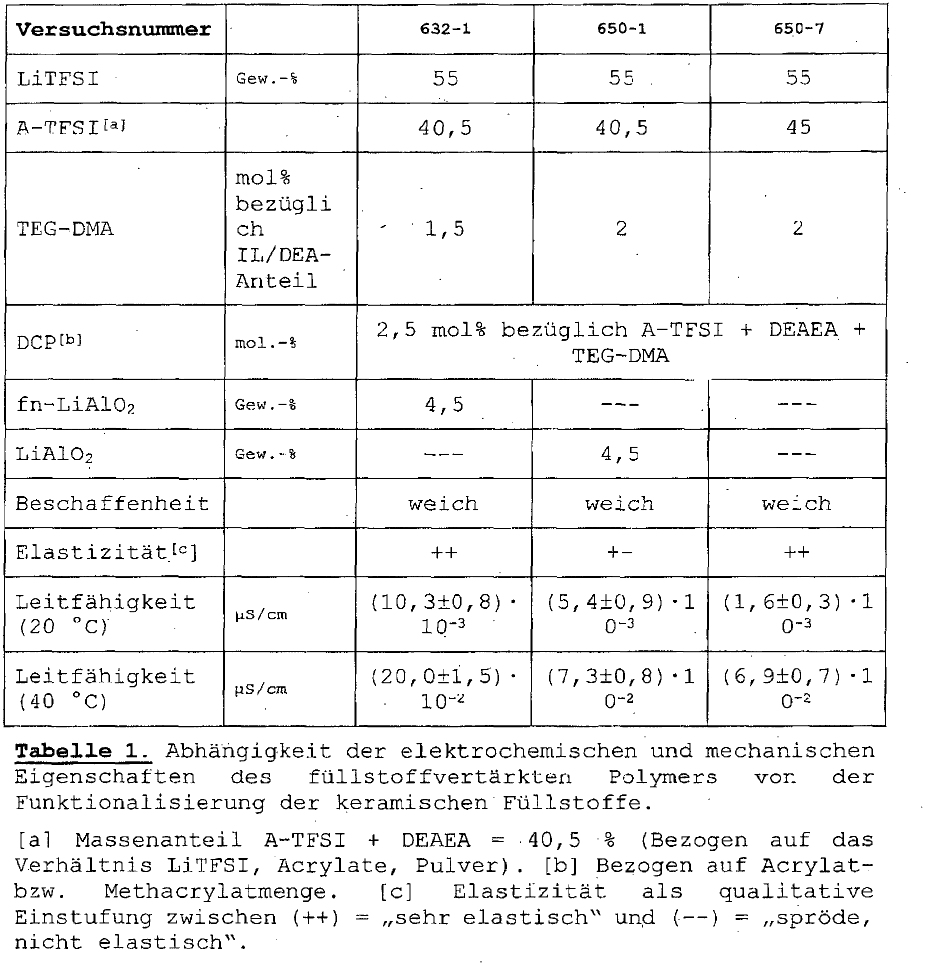

### Ausführungsbeispiel 5: Vorteil funktionalisierter Partikel gegenüber nicht funktionalisierter Partikel hinsichtlich der Dispersionsstabilität

Es wurden Silicananopartikel (d = 20 nm) auf der Oberfläche mit 3-(Methacryloxy)-propyltrimethoxysilan funktionalisiert und mit nicht-funktionalisierten Silicapartikel gleicher Größe verglichen. Dazu wurden die Partikel in Anisol dispergiert. Während sich die nicht funktionalisierten Partikel innerhalb von 10 min absetzten, blieb die Dispersion mit den funktionalisierten Partikeln über mehrere Wochen dispersionsstabil. Im Verfahren ist es wichtig, dass die Partikel dispersionsstabil sind.

### Ausführungsbeispiel 6: Vorteil des Einsatzes von ionischen Flüssigkeiten

Die Tabelle 2 zeigt Mischungen enthaltend unterschiedliche molAnteile (von 0 bis 100) einer acrylathaltigen ionischen Flüssigkeit (N,N,N-Triethyl-N-[2-acryloxy)ethyl]ammonium bis-(trifluoromethansulfonyl)imid) (A-TFSI) und eines einfacher Acrylats ohne ionische Flüssigkeit 2-(Diethylamino)ethylacrylat (DEAEA). Die Probe mit der Versuchsnummer 632-1 enthält also 100 mol-% A-TFSI und die Probe mit der Versuchsnummer 632-5 100 mol-% DEAE.

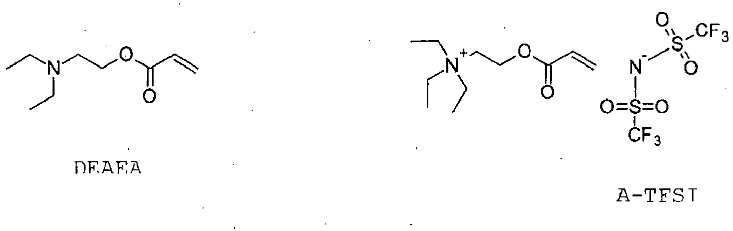

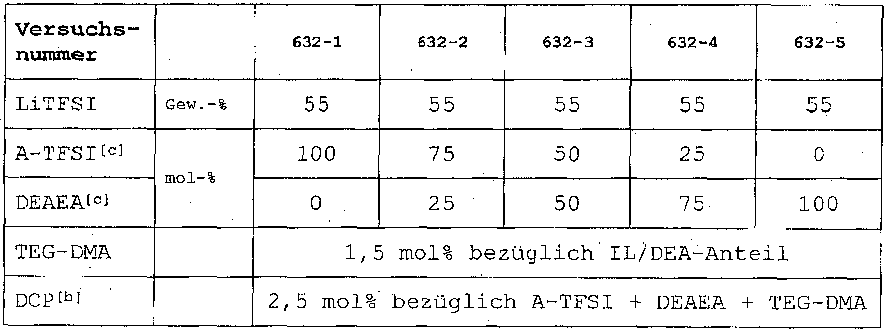

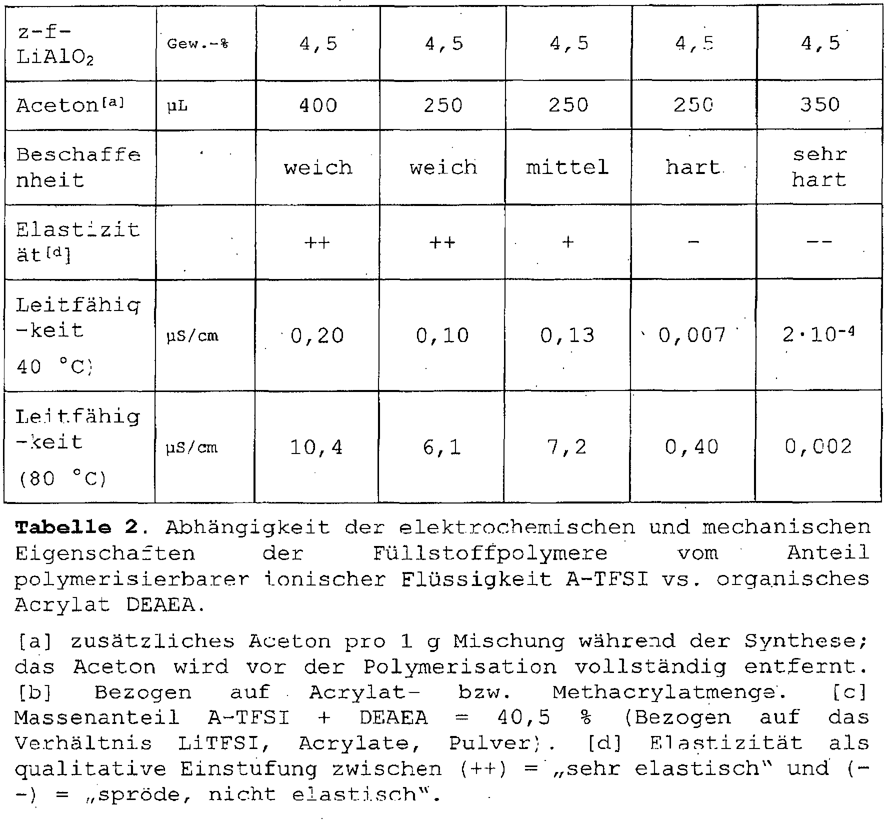

Die Mischungen mit Acrylat versehenen ionischen Flüssigkeiten sind hinsichtlich Beschaffenheit und Leitfähigkeit besser als vergleichbare Acrylate ohne Gegenion.

### Ausführungsbeispiel 7: Weitere Ausführungen

**Tabelle 3** zeigt weitere Ausführungsformen.

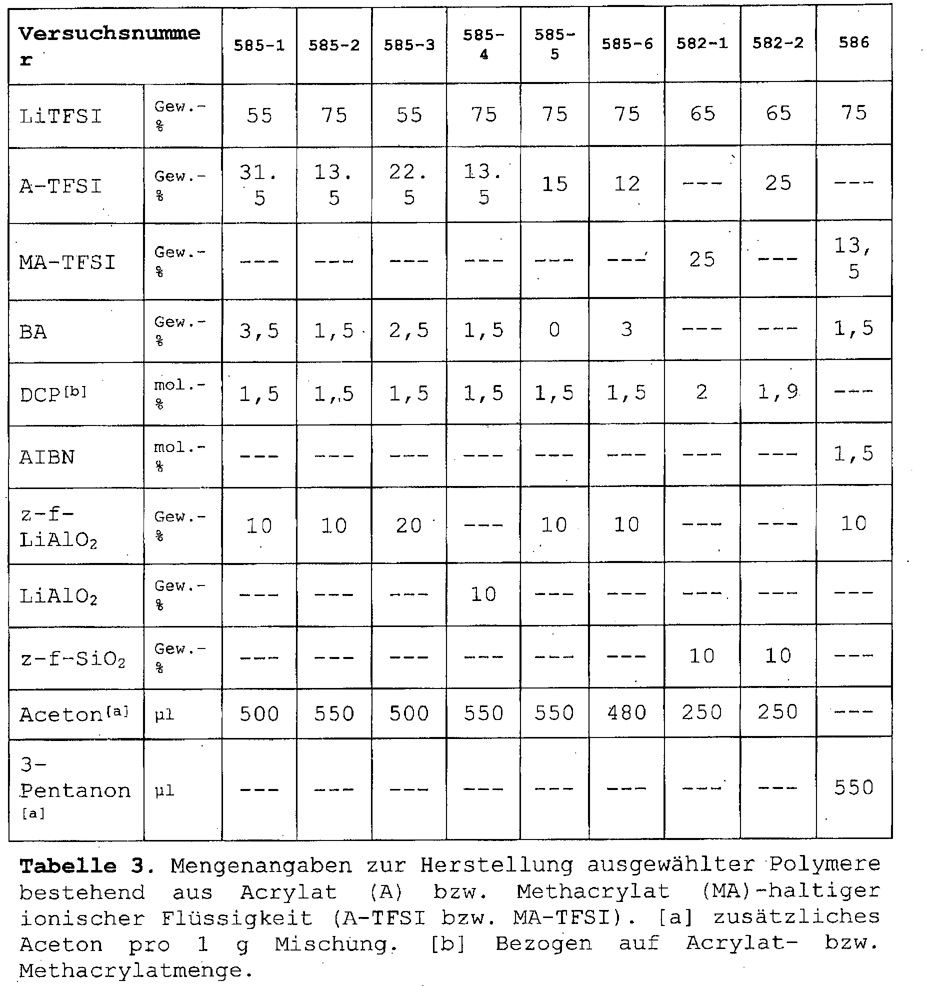

Messungen der Spannungsstabilität ECW (engl. eletrochemical Window) gegen Edelstahl bei den Versuchsnummern 585-4 und 585-5 haben einen Wert von 6,2 V bzw. 6,0 V ergeben. Herkömmliche Ionogele im Stand der Technik weisen Fenster von nur ca. 3 bis 5 V vor.

### Abkürzungen

- LiTFSI: Lithium bis(trifluoromethansulfonyl)imid
- BA: Butylacrylat
- DEAEA: 2-(Diethylamino)ethylacrylat
- DCP: Dicumylperoxid
- AIBN: Azcdiisobutyronitril
- ATFSI: N,N,N-Triethyl-N-[2-(acryloxy) ethyl] ammonium bis(trifluoromethansulfonyl) imid
- z-f: funktionalisierte Partikel
- Gew.-%: Gewichtsprozent
- Mol.-%: Molprozent
- LiBOB: Lithium bis(oxalato)borat
- LiDFOB: Lithium difluoro(oxalato)borat
- LiOTf: Lithium trifluoromethanesulfonat

### Literatur

[1] Zhang et al.: Single lithium-ion conducting solid polymer electrolytes; advances and perspectives, Chem. Soc. Rev., 2017, 46, 796.
[2] Liew et al.: Poly(Acrylic acid)-Based Hybrid Inorganic-Organic Electrolytes Membrane for Electrical Double Layer Capacitors Application; Polymers, 2016, 8, 179.

## Patentansprüche

1. Füllstoffpolymere umfassend Polyacrylate der allgemeinen 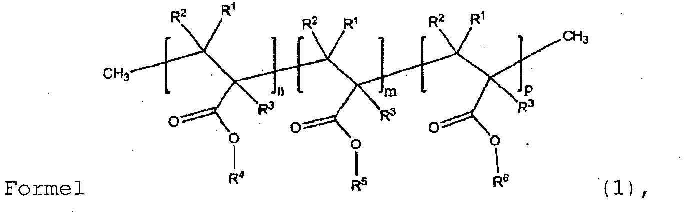 wobei
- R¹, R², R³ eine Alkylgruppe oder H ist und R¹=R²=R³ oder R¹=R²≠R³ oder R¹≠R²=R³ oder R²≠R¹=R³ oder R¹≠R²≠R³,
- n≥1, m≥1, p≥0 und n+m+p die Kettenlänge ist,
- der Rest R⁴ mindestens ein keramischer Füllstoff ist,
- der Rest R⁵ mindestens ein Kation mit einem Gegenanion oder ein Anion mit einem Gegenkation ist,
- der Rest R⁶ ein organischer, keine Ionen enthaltener Rest ist,
- die Monomereinheiten der Polymer-Hauptkette mit den Resten R⁴ oder R⁵ oder R⁶ entlang der Polymer-Hauptkette statistisch verteilt sein können,
- der Rest R⁴ an einer oder mehreren Monomereinheit(en) gebunden ist,
wobei die Polyacrylate der allgemeinen Formel (1) mit den Resten R⁴ oder R⁵ oder R⁶ jeweils mittels mindestens einer kovalenten Bindung verbunden sind.

2. Füllstoffpolymere nach Anspruch 1, wobei die Monomereinheit mit dem Rest R⁵ im unpolymerisierten Zustand eine ionische Flüssigkeit ist.

3. Füllstoffpolymere nach einem der Ansprüche 1 oder 2, wobei der mindestens eine keramische Füllstoff auf dessen Oberfläche freie Hydroxygruppen -OH aufweist.

4. Füllstoffpolymere nach einem der Ansprüche 1 bis 3, wobei der mindestens eine keramische Füllstoff mindestens ein Material aus der Gruppe Al₂O₃, SiO₂, LiAlO₂, BaTiO₃, TiO₂, CeO₂, In₂O₃, MgO, SrO, SnO₂, Y₂O₃, ZnO, ZrO₂, Fe₂O₃, Fe₃O₄, MgAl₂O₄, Mg(CH)₂ ist.

5. Füllstoffpolymere nach einem der Ansprüche 1 bis 4, wobei die keramischen Füllstoffe keramische Mikro- und/oder Nanopartikel umfassen.

6. Füllstoffpolymere nach einem der Ansprüche 1 bis 5, wobei diese zusätzlich Lithium-haltige Leitsalze umfassen.

7. Verfahren zur Herstellung der Füllstoffpolymere nach Anspruch 1 bis 6 mit den Verfahrensschritten:
a) Bereitstellen eines mit mindestens einer Acrylat- und/oder einer Methacrylatgruppe und/oder einer Acrylatderivatgruppe funktionalisierten keramischen Füllstoffs und mindestens eines polymerisierbaren Acrylatderivats und/oder Methacrylatderivats,
b) Mischen des mindestens einen polymerisierbaren Acrylatderivats und/oder Methacrylatderivats mit dem mindestens einen mit mindestens einer Acrylatgruppe und/oder einer Methacrylatgruppe und/oder Acrylatderivatgruppe funktionalisierten keramischen Füllstoff,
c) anschließendes Polymerisieren,
d) Entnehmen des Füllstoffpolymers.

8. Verfahren zur Herstellung der Füllstoffpolymere nach Anspruch 7, wobei im Verfahrensschritt c) das Polymerisieren mittels UV- oder thermisch-inittierter radikalischer Polymerisation erfolgt.

9. Verfahren zur Herstellung der Füllstoffpolymere nach Anspruch 7 oder 3, wobei das polymerisierbare Acrylatderivat und/oder Methacrylatderivat kovalent mit einem Kation oder Anion verbunden ist und eine ionische Flüssigkeit ist.

10. Verwendung der Füllstoffpolymere nach einem der Ansprüche 1 bis 6 als Feststoffelektrolytmembrane in Lithium-Ionen Batterien.

11. Verwendung der Füllstoffpolymere nach Anspruch 10 als Feststoffmembrane, Polymeren mit optischen Eigenschaften, Verstärkung von Kondensatoreffekten oder als Kondensatormembrane.

## Claims

1. Filler polymers, comprising polyacrylates of the general formula: 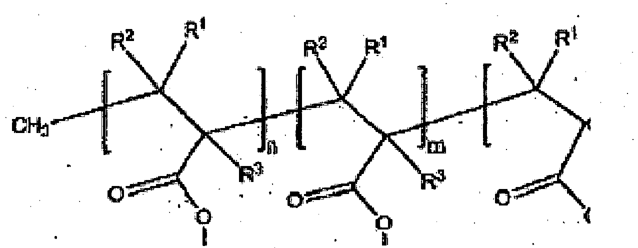 (1) wherein
- R¹, R², R³ is an alkyl group or H, and R¹=R²=R³ or R¹=R²≠R³ or R¹≠R²=R³ or R²≠R¹=R³ or R¹≠R²≠R³,
- n≥1, m≥1, p≥0 and n+m+p is the length of the chain,
- the remnant R⁴ is at least one ceramic filler,
- the remnant R⁵ is at least one cation with a counter-anion or an anion with a counter-cation,
- the remnant R⁶ is an organic remnant containing no ions,
- the monomer units of the polymer main chain with the remnants R⁴ or R⁵ or R⁶ can be statistically distributed along the polymer main chain,
- the remnant R⁴ is bonded to one or more monomer unit(s),
wherein the polyacrylates of the general formula (1) with the remnants R⁴ or R⁵ or R⁶ are in each case bonded by means of at least one covalent bond.

2. Filler polymers according to claim 1, wherein the monomer unit with the remnant R⁵ in the unpolymerised state is an ionic fluid.

3. Filler polymers according to any one of claims 1 or 2, wherein the at least one ceramic filler comprises on its surface free hydroxy groups -OH.

4. Filler polymers according to any one of claims 1 to 3, wherein the at least one ceramic filler is at least one material from the group Al₂O₃, SiO₂, LiAlO₂, BaTiO₃, TiO₂, CeO₂, In₂O₃, MgO, SrO, SnO₂, Y₂O3, ZnO, ZrO₂, Fe₂O₃, Fe₃O₄, MgAl₂O4, Mg(OH)₂.

5. Filler polymers according to any one of claims 1 to 4, wherein the ceramic fillers comprise microparticles and/or nanoparticles.

6. Filler polymers according to any one of claims 1 to 5, wherein these comprise additional conducting salts containing lithium.

7. Method for producing filler polymers according to claims 1 to 6, with the method steps:
a) preparing a functionalising ceramic filler with at least one acrylate group and/or a methacrylate group and/or an acrylate derivative group and at least one polymerisable acrylate derivative and/or methacrylate derivative,
b) mixing the at least one polymerisable acrylate derivative and/or methacrylate derivative with the at least one functionalising ceramic filler with at least one acrylate group and/or a methacrylate group and/or acrylate derivative group,
c) subsequent polymerisation,
d) removal of the filler polymer.

8. Method for producing the filler polymers according to claim 7, wherein, in the method step c), the polymerisation takes place by means of UV or thermally-initiated radical polymerisation.

9. Method for producing the filler polymers according to claim 7 or 8, wherein the polymerisable acrylate derivative and/or methacrylate derivative is covalently bonded with a cation or anion, and is an ionic fluid.

10. Use of the filler polymers according to any one of claims 1 to 6 as solid electrolyte membranes in lithium-ion batteries.

11. Use of the filler polymers according to claim 10 as solid membranes, polymers with optical properties, reinforcement of capacitor effects or as capacitor membranes.

## Revendications

1. Polymères de charge renfermant des polyacrylates de formule générale : 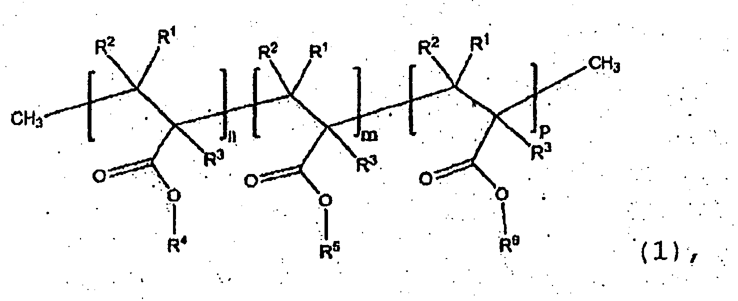 dans laquelle
- R¹, R², R³ représentent un groupe alkyl ou H et R¹=R²=R³ ou R¹=R²≠R³ ou R¹≠R²=R³ ou R²≠R¹=R³ ou R¹≠R²≠R³,
- n≥1, m≥1, p≥0 et n+m+p représente la longueur de la chaîne,
- le groupe R⁴ représente au moins une charge céramique,
- le groupe R⁵ représente au moins un cation ayant un anion antagoniste ou un anion ayant un cation antagoniste,
- le groupe R⁶ est un groupe organique ne renfermant aucun ion,
- les unités monomères de la chaine polymère principale peuvent être réparties de manière statistique avec les groupes R⁴ R⁵ ou R⁶ le long de la chaîne polymère principale,
- le groupe R⁴ est lié à une ou plusieurs unité(s) monomère(s),
- les polyacrylates de formule générale (1) étant respectivement liés aux groupes R⁴ R⁵ ou R⁶ par au moins une liaison covalente.

2. Polymères de charge conformes à la revendication 1,
dans lesquels l'unité monomère renfermant le groupe R⁵ est à l'état non polymérisé, un liquide ionique.

3. Polymères de charge conformes à l'une quelconque des revendications 1 et 2,
dans lesquels la charge céramique comporte sur sa surface des groupes hydroxy -OH libres.

4. Polymères de charge conformes à l'une des revendications 1 à 3,
dans lesquels la charge céramique est un matériau choisi dans le groupe formé par les composés suivants : Al₂O₃, SiO₂, LiAlO₂, BaTiO₃, TiO₂, CeO₂, In₂O₃, MgO, SrO, SnO₂, Y₂O₃, ZnO, ZrO₂, Fe₂O₃, Fe₃O₄, MgAl₂O₄, Mg(OH)₂.

5. Polymères de charge conformes à l'une des revendications 1 à 4,
dans lesquels la charge céramique renferme des microparticules et/ou des nanoparticules céramiques.

6. Polymères de charge conformes à l'une des revendications 1 à 5, renfermant en outre des sels conducteurs renfermant du lithium.

7. Procédé d'obtention de polymères de charge conforme aux revendications 1 à 6,
comprenant des étapes consistant à :
a) se procurer une charge céramique fonctionnalisée avec au moins un groupe acrylate et/ou un groupe méthacrylate et/ou un groupe dérivé d'un acrylate, et au moins un dérivé d'acrylate et/ou un dérivé de méthacrylate polymérisable(s),
b) mélanger le dérivé d'acrylate et/ou le dérivé de méthacrylate polymérisable(s) avec la charge céramique fonctionnalisée avec au moins un groupe acrylate et/ou un groupe métacrylate et/ou un dérivé d'acrylate puis,
c) effectuer la polymérisation,
d) prélever le polymère de charge.

8. Procédé d'obtention de polymères de charge conforme à la revendication 7,
selon lequel lors de l'étape c) la polymérisation est effectuée par polymérisation radicalaire avec initiation par UV ou initiation thermique.

9. Procédé d'obtention de polymères de charge conforme à la revendication 7 ou 8,
selon lequel le dérivé d'acrylate et/ou le dérivé de métacrylate polymérisable(s) est(sont) relié(s) par une liaison covalente avec un cation ou avec un anion et est(sont) un(des) liquide(s) ionique(s).

10. Utilisation de polymères de charge conformes à l'une des revendications 1 à 6,
en tant que membrane électrolytique solide dans une batterie lithium-ions.

11. Utilisation de polymères de charge conformes à la revendication 10, en tant que membrane solide, polymères ayant des caractéristiques optiques, amplificateur d'effets de condensateur ou membrane de condensateur.
